# DEMANDE DE BREVET EUROPEEN

(11) **EP 3 540 205 A1**
(43) Date de publication de la demande: **18.09.2019**
(21) Numéro de dépôt: 19161177.1
(22) Date de dépôt: 07.03.2019
(51) Int. Cl.: F02K 3/062

(54) **GROUPE PROPULSEUR D'AÉRONEF DONT LA NACELLE EST LIÉE PAR UN PIVOT À L'ARBRE D'ENTRAÎNEMENT DE SA SOUFFLANTE**

(30) Priorité: 14.03.2018 FR 1852198
(71) Demandeur: Airbus Operations S.A.S., 31060 Toulouse (FR)
(72) Inventeur: COLMAGRO, Jérôme, 31500 TOULOUSE (FR); TOURIN, Mathias, 31770 COLOMIERS (FR)
(74) Mandataire: Gicquel, Olivier Yves Gérard

(57) **Abrégé**

L'invention porte sur un groupe propulseur d'aéronef, qui comporte un moteur (2) dont un arbre de sortie (11) est lié à un arbre d'entraînement (12) d'une soufflante (6) positionnée en aval dudit moteur (2). La soufflante (6) est comprise dans un conduit formé par une nacelle (3) du groupe propulseur. La nacelle (3) est liée à l'arbre d'entraînement de la soufflante par un pivot de nacelle (19) formé en aval de la soufflante (6).

Cette configuration permet de limiter les déformations de la nacelle lorsqu'elle est soumise à des contraintes mécaniques et permet de garantir, un écart constant entre la soufflante et la nacelle.

## Description

L'invention porte sur le domaine de l'architecture des groupes propulseurs d'aéronef.

Les aéronefs commerciaux présentent en général une architecture générale présentant un fuselage, une voilure comportant deux ailes, et un empennage arrière (et/ou le cas échéant canard). De tels aéronefs comportent un ou plusieurs groupes propulseurs, qui sont communément des turboréacteurs. Les groupes propulseurs peuvent être implantés selon diverses configurations. Ils peuvent par exemple être suspendus sous la voilure par des mâts de support, ou fixés à l'arrière du fuselage par des mâts ou au niveau de l'empennage.

Lors de leur déplacement dans l'air, les surfaces externes de l'aéronef influent sur l'écoulement de l'air. En particulier, lors du déplacement d'un profil aérodynamique dans l'air, une couche limite se crée à la surface dudit profil aérodynamique. Cette couche limite correspond à la zone dans laquelle la vitesse d'écoulement du flux d'air est ralentie par la surface dudit profil (ou autre corps) du fait de la viscosité de l'air.

En général, les groupes propulseurs d'aéronef sont configurés de sorte à ne pas aspirer la couche limite créée sur une surface de l'aéronef. Ainsi, les groupes propulseurs sont communément montés de sorte que leur entrée d'air est située dans un flux d'air libre, qui n'est pas ou que peu perturbé par la surface de l'aéronef. Par exemple, les groupes propulseurs sont disposés sous la voilure, ou à distance du fuselage pour un montage en partie arrière de l'aéronef.

Néanmoins, l'ingestion par le groupe propulseur de la couche limite présente certains avantages comparativement aux groupes propulseurs montés dans un flux d'air libre. En effet, lorsqu'un turboréacteur est monté dans un flux d'air libre, l'énergie cinétique en excès dans le jet est perdue. Lorsque le propulseur est immergé au coeur du flux plus lent de la couche limite, il y a moins d'énergie cinétique en excès, et il faut comparativement moins d'énergie pour obtenir une poussée égale. De plus, le groupe propulseur renvoie de l'énergie dans le sillage, ce qui réduit la trainée.

L'amélioration de l'efficacité de la propulsion des aéronefs est un enjeu majeur actuellement, afin de réduire leur consommation spécifique (c'est dire la consommation de carburant rapportée à la masse de l'aéronef). L'ingestion de la couche limite par un groupe propulseur (désignée généralement par l'acronyme anglophone BLI pour « Boundary Layer Ingestion ») est envisagée selon diverses configurations.

Selon une configuration envisagée, un ou plusieurs groupes propulseurs sont implantés en partie arrière du fuselage.

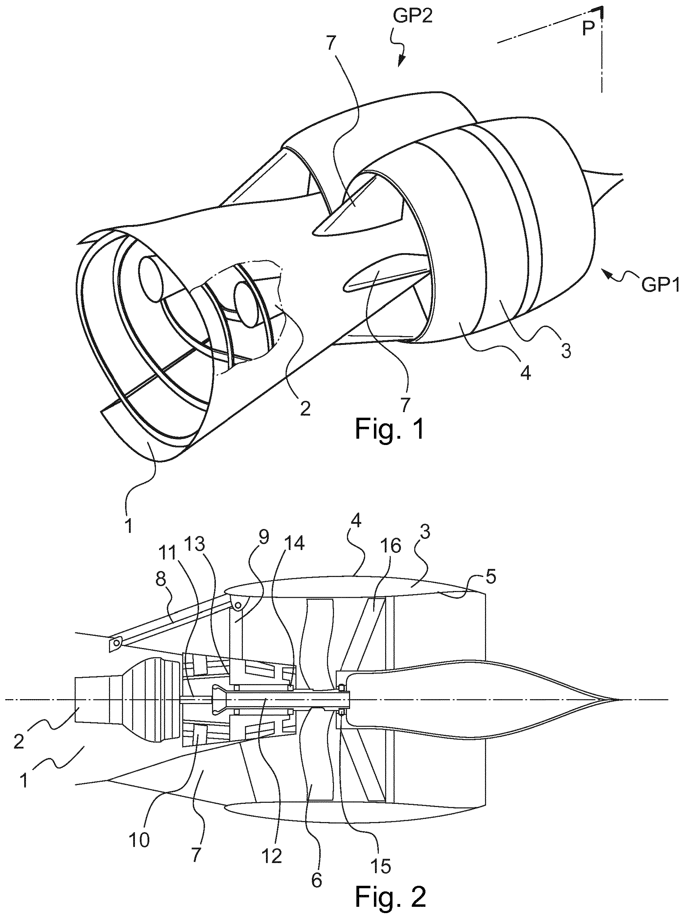

Un exemple de groupe propulseur à ingestion de couche limite envisagé est représenté aux figure 1 et 2 : il comporte un moteur 2, par exemple à turbomachine, dont un arbre de sortie 11 entraîne en rotation une soufflante 6 arrière, c'est-à-dire une soufflante 6 positionnée en aval de la turbomachine selon le sens du flux d'air traversant le groupe propulseur.

La soufflante 6 est contenue dans une nacelle 3 formant un carénage aérodynamique. Afin de réaliser le maintien mécanique de la nacelle 3, dans les groupes propulseurs destinés à être montés à l'arrière d'un fuselage comme celui représenté aux figures 1 et 2 ci-annexées et décrites plus en détail dans ce qui suit, il est envisagé de lier la nacelle 3 de la soufflante 6 à l'extrémité du fuselage par des tirants 8,9 carénés, liés à la nacelle 3 en amont de la soufflante 6.

Dans l'ensemble du présent document, les notions d'amont et d'aval font référence au sens d'écoulement des gaz de propulsion, notamment de l'air, dans le groupe propulseur et notamment dans le conduit que forme sa nacelle 3.

Dans cette configuration, du fait des contraintes exercées sur la nacelle par exemple par les bourrasques verticales ou horizontales, la nacelle 3 peut subir des déplacements de sorte que l'écart entre l'extrémité des pâles de la soufflante 6 et la nacelle 3 ne peut pas être maintenu constant, et égal sur toute la périphérie de la soufflante 6.

L'invention tend à proposer un groupe propulseur d'aéronef résolvant ce problème et une partie arrière de fuselage d'aéronef comportant un tel groupe propulseur à ingestion de couche limite.

Ainsi, l'invention porte sur un groupe propulseur d'aéronef comportant un moteur dont un arbre de sortie est lié à un arbre d'entraînement d'une soufflante positionnée en aval dudit moteur. La soufflante est comprise dans un conduit formé par une nacelle du groupe propulseur. La nacelle est liée à l'arbre d'entraînement de la soufflante par un pivot de nacelle formé en aval de la soufflante.

L'invention ainsi développée propose un groupe propulseur dont la configuration permet de limiter les déformations de la nacelle lorsqu'elle est soumise à des contraintes mécaniques. Cela permet de garantir un écart constant entre la soufflante et la nacelle, par exemple un écart égal entre l'extrémité des pales de la soufflante et la nacelle sur toute la périphérie de la soufflante. Le rendement du groupe propulseur est ainsi amélioré.

Le pivot de nacelle peut être lié rigidement à la nacelle par un ensemble d'aubes fixes.

Le groupe propulseur d'aéronef peut ne comporter aucune liaison mécanique directe, formée dans le conduit ou en regard d'une entrée dudit conduit formé par la nacelle, entre le moteur et ladite nacelle.

Le pivot de nacelle peut comporter au moins deux roulements distants l'un de l'autre le long de l'arbre d'entraînement de la soufflante.

Le pivot de nacelle peut comporter au moins un roulement à billes et un roulement à rouleaux.

L'invention porte également sur une partie arrière d'aéronef comportant une portion arrière de fuselage et au moins un groupe propulseur d'aéronef tel que décrit précédemment, dans laquelle une partie du moteur du groupe propulseur est incluse dans la portion arrière de fuselage et dans lequel aucune liaison mécanique directe n'est formée dans le conduit ou en regard d'une entrée dudit conduit formé par la nacelle entre la portion arrière de fuselage et ladite nacelle.

L'arbre d'entraînement de la soufflante peut être lié à la portion arrière de fuselage par au moins deux roulements distants l'un de l'autre le long de l'arbre d'entraînement de la soufflante. Lesdits roulements peuvent comporter au moins un roulement à billes et un roulement à rouleaux.

L'invention porte enfin sur un aéronef comportant une partie arrière telle que décrite précédemment.

D'autres particularités et avantages de l'invention apparaîtront encore dans la description ci-après.

Aux dessins annexés, donnés à titre d'exemples non limitatifs :
- la figure 1 représente, selon une vue schématique en trois dimensions, un groupe propulseur d'aéronef et son implantation sur un aéronef selon un mode de réalisation envisagé antérieurement à l'invention ;
- la figure 2 représente, selon une vue en coupe, le groupe propulseur de la figure 1 ;
- la figure 3 représente selon un schéma de principe la configuration du groupe propulseur des figures 1 et 2 ;
- la figure 4 illustre, selon une vue analogue à celle de la figure 3, une problématique posée par un groupe propulseur ayant la configuration présentée à la figure 3;
- la figure 5 illustre, selon une vue analogue à celle des figures 3 et 4, la configuration d'un groupe propulseur conforme à l'invention ;
- la figure 6 illustre, selon une vue analogue à celle des figures 3 à 5, comment le groupe propulseur conforme à l'invention répond à la problématique présentée en référence à la figure 4 ;
- la figure 7 représente, selon une vue en coupe analogue à celle de la figure 2, un groupe propulseur conforme à un mode de réalisation de l'invention ;
- la figure 8 illustre, selon une vue schématique en trois dimensions, le groupe propulseur de la figure 7 implanté à l'arrière du fuselage d'un aéronef.

La figure 1 représente un groupe propulseur d'aéronef et son implantation sur un aéronef selon un mode de réalisation envisagé antérieurement à l'invention. Plus précisément, la figure 1 représente un premier groupe propulseur GP1 et un deuxième groupe propulseur GP2 implantés côté à côte au niveau d'une portion arrière de fuselage 1. Les groupes propulseurs et la portion arrière de fuselage 1 constituent la partie arrière d'un aéronef. Les groupes propulseurs GP1, GP2 sont identiques, de sorte que seul l'un des groupes propulseurs GP1, GP2 est détaillé ci-après, en l'occurrence le premier groupe propulseur GP1 désigné ci-après « le groupe propulseur ».

Le groupe propulseur comporte un moteur 2 qui est essentiellement inclus dans la portion arrière de fuselage 2. Le moteur peut être une turbomachine, notamment un turboréacteur, dont la partie arrière peut former la partie extrême arrière du fuselage. Dans l'exemple ici représenté, la turbomachine est positionnée en amont de la soufflante, et le cône d'éjection est positionnée en aval de cette dernière.

Le groupe propulseur comporte en outre une nacelle 3 dans laquelle est installée une soufflante. La nacelle 3 comporte un carénage aérodynamique externe 4, et un carénage aérodynamique interne 5. Le carénage aérodynamique interne 5 forme un conduit pour les gaz de propulsion de l'aéronef. La soufflante 6 est installée dans le conduit de la nacelle 3.

La nacelle 3 du groupe propulseur est liée à la partie arrière de fuselage 2. Les liaisons mécaniques entre la nacelle 3 et la partie arrière de fuselage 2 peuvent être formées par des tirants intégrés dans des carénages de tirants 7.

Un inconvénient de cette configuration tient à la présence des carénages de tirant 7 qui forment une gêne à l'entrée de l'air dans la nacelle 3.

La figure 2 représente le premier groupe propulseur GP1 de la figure 1 en coupe, selon le plan de coupe longitudinal P représenté à la figure 1. L'axe principal (de rotation du moteur et de la soufflante) du premier groupe propulseur GP1 est situé dans le plan P, qui est dit vertical, c'est-à-dire que le plan P est orthogonal au plan dans lequel sont situés les axes principaux des premiers et deuxième groupes propulseurs GP1, GP2.

A la figure 2, l'un des carénages de tirants 7 est coupé, et laisse apparaitre un premier tirant 8 et un deuxième tirant 9, reliant un même point de la nacelle 3 à deux points de la portion arrière de fuselage 2. En particulier, le premier tirant 8 relie un point de la nacelle 3 à un élément structurel du fuselage, et le deuxième tirant 9 relie ce même point à une partie arrière de turboréacteur 10 qui fait partie du moteur mais forme la partie extrême arrière du fuselage. Cela forme une liaison entre la portion arrière de fuselage 1 et l'avant de la nacelle 3.

Le moteur 2 comporte un arbre de sortie 11 qui est lié à un arbre d'entraînement 12 de la soufflante 6. L'arbre de sortie 11 peut mettre en rotation l'arbre d'entraînement 12, et la soufflante 6 est rigidement montée sur l'arbre d'entraînement 12.

Un autre inconvénient de la configuration de groupe propulseur des figures 1 et 2 réside dans la proximité entre le bord de fuite des carénages de tirant et la soufflante 6. Cette proximité crée un effet de masquage successif des aubes de la soufflante, ayant pour conséquences des variations de charge sur lesdites aubes de la soufflante et la génération de bruit.

L'arbre d'entraînement 12 est lié en pivot à la portion arrière de fuselage, et plus précisément à la partie arrière de turboréacteur formant la partie arrière de la portion arrière de fuselage 1.

Dans l'ensemble du présent document, un pivot désigne une liaison à un seul degré de liberté, en rotation autour d'un axe. Notamment une rotule présentant ce même degré de liberté parmi ces degrés de liberté ne constitue pas un pivot au sens du présent document.

Le pivot formé entre l'arbre d'entraînement 12 et la portion arrière de fuselage 1, au niveau de la partie arrière de turboréacteur 10, est formé, dans l'exemple représenté, par deux roulements espacés l'un de l'autre le long de l'arbre d'entraînement 12 et disposés sur l'arbre d'entraînement 12 en amont de la soufflante 6. Ce pivot est dit pivot de fuselage.

Typiquement, un premier roulement 13 peut être un roulement à billes, et un deuxième roulement 14 peut être un roulement à rouleaux. Cette combinaison permet une bonne reprise des efforts radiaux et axiaux, à savoir des efforts axiaux par le premier roulement 13 à billes, et des efforts radiaux essentiellement par le deuxième roulement à rouleaux et pour partie par le premier roulement 13 à billes.

En aval de la soufflante 6, l'arbre d'entraînement 12 porte un roulement arrière 15. Le roulement arrière permet la rotation de l'arbre d'entraînement 12 vis-à-vis d'un ensemble d'aubes fixes 16 liées d'autre part à la nacelle 3.

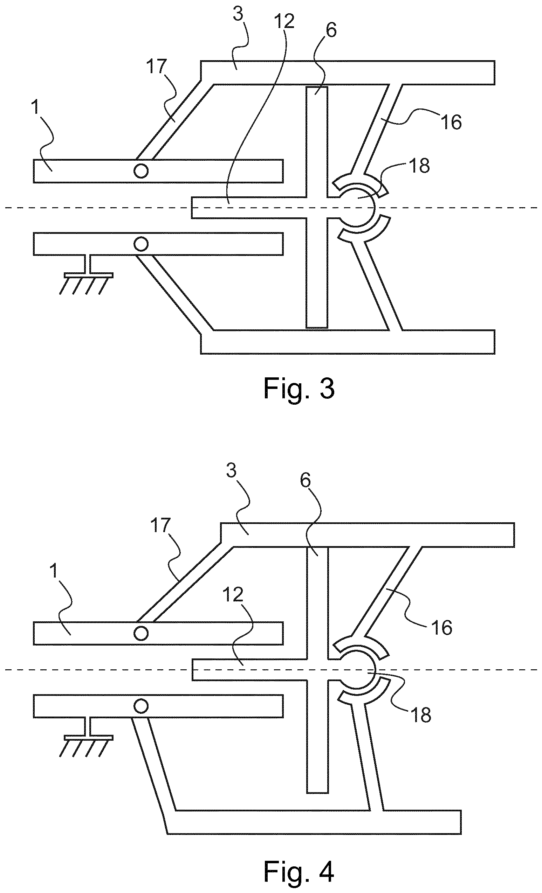

Les figures 3 et 4 illustrent un autre inconvénient de la configuration envisagée antérieurement à l'invention.

La figure 3 représente schématiquement le comportement des liaisons mises en oeuvre entre le groupe propulseur et la portion arrière de fuselage 1 représentés aux figures 1 et 2.

La portion arrière de fuselage 1 est considérée comme un élément fixe. Les premier et deuxième tirants 8,9 peuvent être modélisés, au moins pour des mouvements de faible amplitude de la nacelle 3, comme un tirant unique 17, lié en pivot à la portion arrière de fuselage 1. La liaison entre les aubes fixes et l'arbre d'entraînement 12 peut être modélisée comme une rotule 18.

La nacelle 3 subit lors du vol de l'aéronef qui en est équipé des contraintes mécaniques importantes. Ces contraintes mécaniques sont liées par exemple à des bourrasques de vent verticales ou horizontales, ou à certaines conditions d'atterrissage de l'aéronef.

La figure 4 illustre l'effet que peuvent avoir ces contraintes sur le groupe propulseur. Plus précisément, la figure 4 illustre la déformation que la nacelle 3 peut présenter sous l'effet de contraintes vu la configuration de ses liaisons avec la portion arrière de fuselage 1 et l'arbre d'entraînement 12. Bien évidemment, les mouvements et déformations sont montrés de manière très amplifiées à la figure 4, à titre purement illustratif. A la figure 4, du fait de la déformation de la nacelle 3, la distance entre l'extrémité des pâles de la soufflante et le carénage aérodynamique interne 5 de la nacelle n'est pas égal sur toute la périphérie de la soufflante. Typiquement, dans un cas extrême illustré à la figure 4, un contact, un frottement, ou une extrême proximité entre la soufflante 6 et le carénage aérodynamique interne 5 de la nacelle peut se produire d'un côté de la nacelle, tandis que du côté diamétralement opposé un écart important est créé entre la soufflante 6 et le carénage aérodynamique interne 5 de la nacelle. Cela impacte fortement le rendement du groupe propulseur.

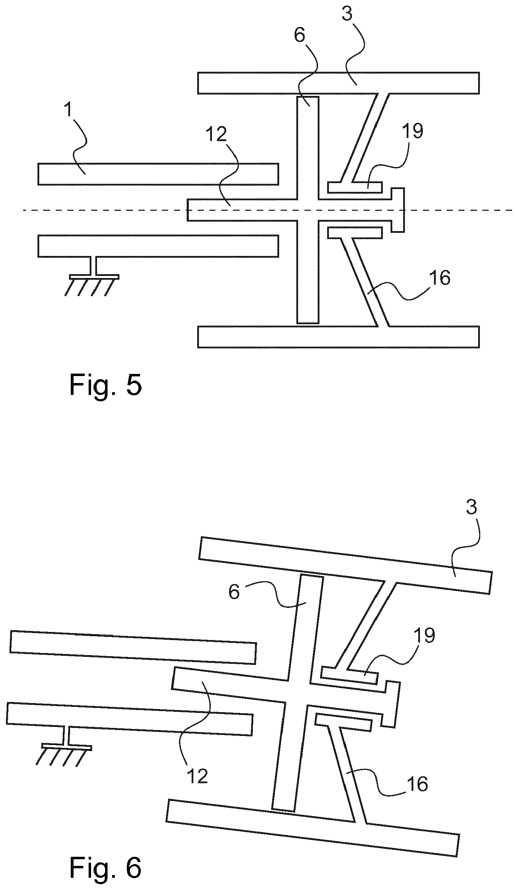

La configuration de groupe propulseur d'aéronef développée dans l'invention est illustrée à la figure 5 selon une représentation de principe analogue à celle des figures 3 et 4.

Dans le mode de réalisation de l'invention illustré à la figure 5, la nacelle 3 est liée à l'arbre d'entraînement de la soufflante par un pivot, dit pivot de nacelle 19, en lieu et place de la rotule formée dans la configuration représentée aux figures 1 à 4.

En outre, aucun tirant ou autre liaison mécanique ne relie directement la nacelle à la partie arrière de fuselage 1, ou au moteur au niveau de la partie arrière de turboréacteur 10. Par liaison mécanique directe, on entend une liaison dans laquelle une pièce mécanique est interposée entre deux éléments dans le but de les relier. La liaison de la nacelle au moteur via le pivot de nacelle, et l'arbre d'entraînement 12 lié à l'arbre de sortie 11 ne constitue ainsi pas une liaison mécanique directe. En effet, il n'y aucune pièce de liaison interposée directement entre le la nacelle et le moteur : la liaison entre le moteur et la nacelle est réalisée par l'arbre d'entraînement de soufflante (qui est lié à l'arbre de sortie du moteur) et les aubes fixes 16 via le pivot de nacelle 19.

Ainsi, comparativement à la configuration représentée aux figures 1 à 4, il est proposé dans l'invention de remplacer la liaison rotule formée entre l'arbre d'entraînement de la soufflante par une liaison pivot. En outre, les tirants liant la nacelle au moteur, notamment au niveau de la partie arrière de turboréacteur 10, sont supprimés. Le reste de la configuration proposée dans l'invention est identique, et la description ci-dessus des figures 1 à 4 s'applique à celle des figures 5 à 8, à l'exception de ces différences.

La figure 6 illustre l'effet que peuvent avoir des contraintes similaires à celles dont l'effet est illustré à la figure 4 et s'appliquant à la nacelle 3. A la figure 6, l'absence de tirant va permettre un mouvement de la nacelle sans entraîner sa déformation. Tout comme à la figure 4, le mouvement de la nacelle est ici largement augmenté afin d'en visualiser la nature. Le pivot de la nacelle et le pivot de fuselage sont configurés de sorte que le maintien radial du pivot de nacelle 19 soit supérieur à celui du pivot de fuselage, de sorte qu'une contrainte importante exercée sur la nacelle 3, qui provoque un basculement de la nacelle, entraîne un basculement identique de l'arbre d'entraînement 12, et donc de la soufflante 6.

Ainsi, un léger mouvement de la nacelle 3 entraîne un mouvement correspondant des éléments qui y sont en rotation, à savoir l'arbre d'entraînement 12 et la soufflante 6, de sorte que leur position relative respective vis-à-vis de la nacelle 3 est inchangée. La distance entre l'extrémité des pâles de la soufflante 6 et le carénage aérodynamique interne 5 de la nacelle 3 reste inchangée ou sensiblement inchangée comparativement à la situation en l'absence de contrainte importante exercée sur la nacelle, et peut ainsi être maintenue sensiblement égale sur toute la périphérie de la soufflante 6.

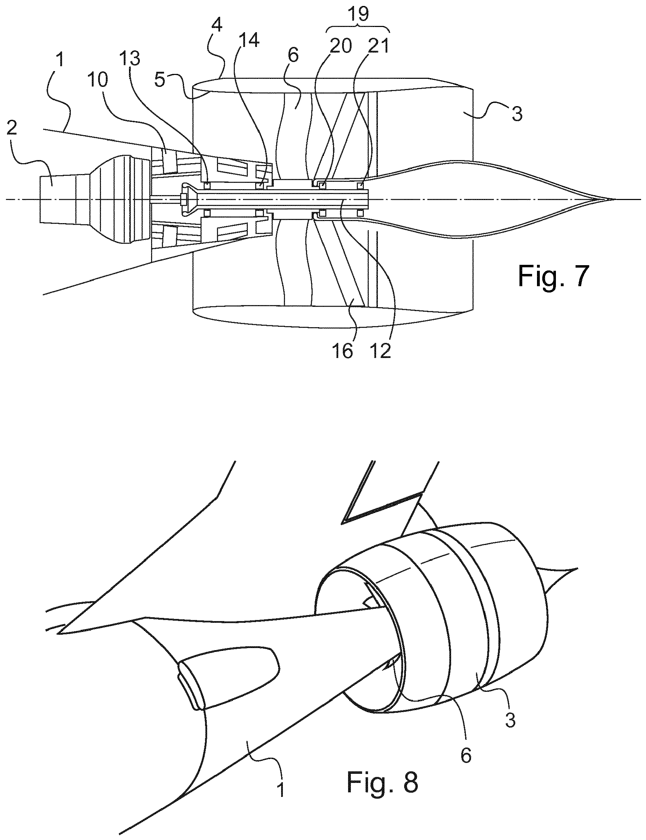

La figure 7 illustre selon une vue en coupe analogue à celle de la figure 2 un exemple de mode de réalisation d'un groupe propulseur conforme à l'invention implanté dans une portion arrière de fuselage 1.

La configuration générale du groupe propulseur est similaire à celle du groupe propulseur qui est représentée à la figure 2, de sorte que la description faite en référence aux figures 1 et 2 s'applique hormis les différences détaillées ci-après.

Le pivot de nacelle 19 est formé par deux roulements 20, 21, positionnés à distance l'un de l'autre autour de l'arbre d'entraînement 12. En particulier, un troisième roulement 20 peut être un roulement à billes, et un quatrième roulement 21 peut être un roulement à rouleaux.

Cette combinaison permet une bonne reprise des efforts radiaux et axiaux, à savoir des efforts axiaux par le troisième roulement 20 à billes, et des efforts radiaux essentiellement par le quatrième roulement 21 à rouleaux et pour partie par le troisième roulement 20 à billes.

Aucune liaison mécanique n'est formée dans le conduit ou en regard d'une entrée dudit conduit, directement entre le moteur et ladite nacelle. Ainsi, aucun tirant et conséquemment aucun carénage de tirant ne relie la portion arrière de fuselage et/ou le moteur (par exemple au niveau de la partie arrière de turboréacteur 10).

En l'absence de telles liaisons mécaniques, l'architecture générale du groupe propulseur est simplifiée, ainsi que son montage sur un aéronef sont simplifiés comparativement à un groupe propulseur monté selon une configuration antérieure à l'invention.

Comme cela est bien visible à la figure 8, qui représente une partie arrière d'aéronef équipée du groupe propulseur de la figure 7, cela libère l'entrée du conduit de la nacelle 3 de tout élément pouvant gêner l'entrée d'air ou perturber son flux en amont de la soufflante 6. En outre, l'absence d'éléments susceptible de générer un effet de masquage des aubes de la soufflante évite la génération de bruit lié à ce masquage.

L'invention ainsi développée propose une configuration de groupe propulseur d'aéronef à ingestion de couche limite, destiné à être implanté en partie arrière d'un fuselage d'aéronef, et permettant de limiter les déformations sous contraintes mécaniques de la nacelle. Cela permet de garantir un écart constant entre la soufflante et la nacelle. La distance entre l'extrémité des pales de la soufflante et la nacelle peut être diminué. Le rendement du groupe propulseur est ainsi amélioré, et peut être maintenu de manière fiable malgré les charges exercées sur la nacelle.

En outre, la configuration de liaison entre la nacelle et la partie arrière de l'aéronef proposée dans l'invention permet d'éviter la présence d'obstacle à l'écoulement de l'air à l'entrée de la nacelle. Cela améliore la performance du groupe propulseur et évite les effets de masquage de la soufflante du groupe propulseur.

## Revendications

1. Groupe propulseur d'aéronef comportant un moteur (2) dont un arbre de sortie (11) est lié à un arbre d'entraînement (12) d'une soufflante (6) positionnée en aval dudit moteur (2), ladite soufflante (6) étant comprise dans un conduit formé par une nacelle (3) du groupe propulseur,
**caractérisé en ce que** la nacelle (3) est liée à l'arbre d'entraînement de la soufflante par un pivot de nacelle (19) formé en aval de la soufflante (6).

2. Groupe propulseur d'aéronef selon la revendication 1, dans lequel le pivot de nacelle (19) est lié rigidement à la nacelle (3) par un ensemble d'aubes fixes (16).

3. Groupe propulseur d'aéronef selon la revendication 1 ou la revendication 2, dans lequel aucune liaison mécanique directe n'est formée dans le conduit ou en regard d'une entrée dudit conduit formé par la nacelle (3) entre le moteur (2) et ladite nacelle (3).

4. Groupe propulseur d'aéronef selon l'une des revendications précédentes, dans lequel le pivot de nacelle (19) comporte au moins deux roulements (20, 21) distants l'un de l'autre le long de l'arbre d'entraînement (12) de la soufflante (6).

5. Groupe propulseur d'aéronef selon la revendication 4, dans lequel le pivot de nacelle (19) comporte au moins un roulement à billes et un roulement à rouleaux.

6. Partie arrière d'aéronef comportant une portion arrière de fuselage (1) et au moins un groupe propulseur d'aéronef selon l'une des revendications précédentes, dans laquelle une partie du moteur (2) du groupe propulseur est incluse dans la portion arrière de fuselage (1) et dans lequel aucune liaison mécanique directe n'est formée dans le conduit ou en regard d'une entrée dudit conduit formé par la nacelle (3) entre la portion arrière de fuselage (1) et ladite nacelle (3).

7. Partie arrière d'aéronef selon la revendication 6, dans laquelle l'arbre d'entraînement (12) de la soufflante est lié à la portion arrière de fuselage par au moins deux roulements (13,14) distants l'un de l'autre le long de l'arbre d'entraînement de la soufflante.

8. Partie arrière d'aéronef selon la revendication 7, dans laquelle lesdits roulements comportent au moins un roulement à billes et un roulement à rouleaux.

9. Aéronef comportant une partie arrière selon l'une des revendications 6 à 8.
